# EUROPÄISCHE PATENTSCHRIFT

(11) **EP 0 849 517 B1**
(45) Veröffentlichungstag und Bekanntmachung des Hinweises auf die Patenterteilung: **10.10.2001**
(21) Anmeldenummer: 97120517.4
(22) Anmeldetag: 22.11.1997
(51) Int. Cl.: F16L 3/233, B65D 63/10

(54) **Spannband**
Clamping band
Collier de serrage

(30) Priorität: 18.12.1996 DE 19652726
(43) Veröffentlichungstag der Anmeldung: 24.06.1998
(73) Patentinhaber: Volkswagen Aktiengesellschaft, 38436 Wolfsburg (DE)
(72) Erfinder: Kastner, Michael, Dipl.-Ing., 38446 Wolfsburg (DE)

(56) Entgegenhaltungen:
- EP-A- 0 677 688
- US-A- 3 747 164
- US-A- 4 001 898
- US-A- 4 776 067

## Beschreibung

Die Erfindung betrifft ein Spannband zum Bündeln und/oder zur Halterung wenigstens eines langgestreckten Gegenstandes mit einem mit Arretierelementen versehenen langgestreckten biegsamen Bandteil und einem Spannschloß zum Arretieren des um den Gegenstand herumgeschlungenen und gegen diesen anliegenden Bandteils im Spannschloß durch gegenseitigen Eingriff zwischen einer Sperre des Spannschlosses und mindestens einem der Arretierelemente des Bandteils, wobei der gegenseitige Eingriff eine Erweiterung eines vom Bandteil umschlossenen und von dem wenigstens einen Gegenstand durchsetzten Auges verhindert, sowie mit einem zusätzlichen Sperrglied, das durch eine gegenseitige Annäherung des Bandteils und des Sperrgliedes infolge einer von dem Gegenstand auf den Bandteil oder das Sperrglied ausgeübten Kraft mit dem Bandteil in Eingriff tritt, sobald der Bandteil den wenigstens einen Gegenstand eng anliegend umgibt, und das an seiner zur Zugrichtung des Bandteils entgegengesetzten Seite mindestens eine Anschlagfläche aufweist, die bei einem Eingriff zwischen dem Sperrglied und dem Bandteil gegen eine in Zugrichtung weisende komplementäre Anschlagfläche von einem oder mehreren der Arretierelemente oder von einem oder mehreren zusätzlichen Rastelementen des Bandteils anschlägt.

Spannbänder mit einem mit Arretierelementen versehenen langgestreckten biegsamen Bandteil und einem Spannschloß zum Arretieren des um mindestens einen langgestreckten Gegenstand herumgeschlungenen und gegen diesen anliegenden Bandteils im Spannschloß durch gegenseitigen Eingriff zwischen einer Sperre des Spannschlosses und mindestens einem der Arretierelemente des Bandteils werden auch als Kabelbinder bezeichnet und im allgemeinen verwendet, um Kabelbaum-, Rohr- oder Schlauchstrangabschnitte aus einer Mehrzahl von einzelnen, nebeneinander verlaufenden Kabeln, Rohren, Schläuchen oder dergleichen zusammenzuhalten und ggf. an einer Halterung aufzuhängen. Dazu wird der auf einem Teil seiner Länge mit hintereinander angeordneten Stegen, Rippen, Zähnen oder anderen Arretierelementen versehene Bandteil um die zu bündelnden Kabel, Rohre oder Schläuche herumgeschlungen und sein zum Spannschloß entgegengesetztes freies Ende durch eine Durchtrittsöffnung im Spannschloß hindurchbewegt, in der die elastisch nachgiebige Sperre angeordnet ist. Die Sperre ist so ausgestaltet, daß sie ohne eine äußere Krafteinwirkung in einer Eingriffstellung eines oder mehrere Arretierelemente des Bandteils im Spannschloß hintergreift, beim Hindurchbewegen des Bandteils durch die Durchtrittsöffnung von jedem der vorbeitretenden Arretierelemente reversibel ausgelenkt wird und sich infolge ihrer elastischen Rückstellkraft jeweils wieder in die Eingriffstellung bewegt, in der sie eine Rückwärtsbewegung des Bandteils entgegen seiner Zugrichtung blockiert. Der Bandteil wird gewöhnlich so weit durch die Durchtrittsöffnung gezogen, bis er die umschlungenen Kabel, Rohre oder Schläuche straff anliegend umgibt und sich nicht mehr weiterbewegen läßt.

Dies kann jedoch bei quetschempfindlichen Rohren, insbesondere dünnwandigen Rohren oder längsgeschlitzten Wellrohren, welche zum Beispiel im Automobilbau u.a. im Motorraum als Wärme- und Feuchtigkeitsschutz für Kabel verwendet werden, oder bei Schläuchen mit einer elastisch nachgiebigen, verformbaren Schlauchwand zu einem unerwünschten Zusammenquetschen der Rohre oder Schläuche führen, was deren Beschädigung oder Zerstörung bzw. eine ungewollte Querschnittsverringerung zur Folge hat. Grundsätzlich kann dem zwar entgegengewirkt werden, indem man die Spannbänder weniger straff anzieht. Jedoch müssen gerade im Motorraum von Kraftfahrzeugen die Spannbänder häufig "blind" montiert werden und dürfen wegen der Gefahr eines Scheuerns oder Klapperns der Kabel, Rohre oder Schläuche auch nicht zu locker angezogen werden. Um diese Schwierigkeiten zu vermeiden, werden im Automobilbau gewöhnlich an den jeweiligen Einsatzzweck angepaßte unterschiedlich lange Spannbänder verwendet, deren Bandteil mit einem Anschlag versehen ist, der gegen das Spannschloß anschlägt und eine weitere Verengung des Auges verhindert, wenn dieses vorgegebene Querschnittsabmessungen aufweist. Dies führt jedoch zu einer großen Vielfalt unterschiedlich langer Spannbänder, was zum einen logistische Probleme zur Folge hat und zum anderen bei der Montage selbst zu Verwechslungen führen kann.

Aus der US-A-4776067 ist bereits ein Spannband der eingangs genannten Art bekannt. Der Eingriff zwischen dem von mehreren festen Zähnen an der Eintrittsöffnung des Spannschlosses gebildeten Sperrglied und dem Bandteil soll dort bewirken, dass der Bandteil hauptsächlich von den festen Zähnen innerhalb des Spannschlosses zurückgehalten wird, wodurch die Belastung der Sperre selbst verringert werden kann. Die festen Zähne des Sperrgliedes und die Zähne des Spannbandes weisen dazu jeweils eine steile und eine flache Flanke auf, bezogen auf die Längsrichtung des Bandteils. Wenn die vom Spannband umschlungenen Gegenstände die Zähne des Bandteils in Eingriff mit den festen Zähnen des Spannschlosses drücken, schlagen jeweils die komplementären Flanken gegeneinander an. Eine Blockierwirkung zwischen dem Sperrglied und dem Bandteil wird jedoch nur durch das gegenseitige Anschlagen der steilen Flanken erreicht, die bei den festen Zähnen des Sperrgliedes in Zugrichtung und bei den Zähnen des Bandteils entgegen der Zugrichtung weisen, so dass das Sperrglied ebenso wie die Sperre ein Zurückziehen des Bandteils aus dem Spannschloss und damit eine Erweiterung des vom Spannband umschlossenen Auges verhindert. Im Gegensatz dazu kann jedoch das Spannband auch nach einem Eingriff noch in Zugrichtung durch das Spannschloss bewegt werden, weil sich bei einer Bewegung in dieser Richtung die gegeneinander anliegenden flachen Flanken der Zähne in Bezug zueinander verschieben können. Somit können mit dem bekannten Spannband Quetschungen empfindlicher Gegenstände durch eine vom Spannband auf die Gegenstände ausgeübte Kraft nicht verhindert werden.

Entsprechendes gilt auch für ein in der EP-A-677688 offenbartes Spannband, bei dem der mit Zähnen versehene Bandteil vor dem Eintritt in das Spannschloss gegen ein Sperrglied in Form einer scharfen Kante gedrückt wird, wenn das Spannband die zu bündelnden Gegenstände eng anliegend umschließt. Die Kante dringt dabei zwischen zwei benachbarten Zähnen in den Bandteil ein, wenn die Zugkraft im Bandteil vergrößert wird. Durch eine scharfe Umlenkung des Bandteils beim Eintritt in das Spannschloss infolge einer von den Gegenständen darauf ausgeübten Druckkraft verhakt sich einer der Zähne des Bandteils hinter der Kante, was zusammen mit der Sperre dazu beiträgt, eine Bewegung des Bandes entgegen der Zugrichtung zu blockieren. Eine Bewegung des Bandes in Zugrichtung durch das Spannschloss wird jedoch nicht blockiert, weil sich die Zähne der Kante in Zugrichtung unter einem sehr flachen Neigungswinkel der von der Kante begrenzten Eintrittsöffnung des Spannschlosses nähern und somit leicht über diese Kante gleiten.

Ausgehend hiervon liegt der Erfindung die Aufgabe zugrunde, ein Spannband der eingangs genannten Art dahingehend zu verbessern, daß sich quetschempfindliche Kabel, Rohre, Schläuche und dergleichen Gegenstände bündeln lassen, wobei auch bei unterschiedlichen Gesamtquerschnitten des Bündels keine Gefahr von Quetschungen oder Querschnittsverringerungen der Gegenstände besteht.

Diese Aufgabe wird erfindungsgemäß dadurch gelöst, dass die komplementären Anschlagflächen des Sperrgliedes und der Arretier- oder Rastelemente so ausgebildet sind, daß sie beim gegenseitigen Anschlagen eine weitere Bewegung des Bandteils in Zugrichtung blockieren und eine weitere Verengung des vom Bandteil umschlossenen Auges verhindern, wenn der Bandteil die Gegenstände eng anliegend umgibt, wobei der Blockiereingriff zwischen dem Sperrglied und dem Bandteil durch eine gegenseitige Annäherung des Bandteils und des Sperrglieds infolge einer von den Gegenständen auf den Bandteil oder das Sperrglied ausgeübten Kraft bewirkt wird. Der Erfindung liegt die Erkenntnis zugrunde, daß sich die vom Spannband umschlungenen Gegenstände beim Zusammenschnüren durch eine auf das freie Ende des Bandteils einwirkende Zugkraft innerhalb des Auges gegeneinander verschieben, bis sie den kleinstmöglichen oder einen etwas über diesem liegenden Gesamtquerschnitt aufweisen und rundum gegen den Bandteil anliegen. Wenn nun weiterhin eine Zugkraft auf das freie Ende des Bandteils aufgebracht wird, bewirkt diese Kraft eine Druckkraft von außen auf die Gegenstände, der schließlich zu einem Zusammenquetschen derselben führen kann. Dieser Druckkraft wirkt eine zunehmende Reaktionskraft entgegen, die sich ausnutzen lässt, um das Zusammenquetschen zu verhindern. Dies erfolgt, indem man am Spannschloß oder in dessen Nähe ein Sperrglied vorsieht, das entweder zwischen den Gegenständen und dem Bandteil angeordnet ist, so daß es durch die Reaktionskraft nach außen gedrückt und mit dem Bandteil in Blockiereingriff gebracht wird, oder außerhalb des Bandteils angeordnet ist, so daß der Bandteil durch die Reaktionskraft nach außen gedrückt und mit der Sperre in Blockiereingriff gebracht wird.

Das erfindungsgemäße Spannband läßt sich unabhängig vom Gesamtquerschnitt der umschlungenen Gegenstände einsetzen, wodurch neben geringeren Herstellungskosten vor allem logistische Vorteile und eine größere Prozeßsicherheit durch Vermeidung von Verwechslungen erzielt werden können, ohne daß der Aufwand zur Herstellung des Spannbandes wesentlich vergrößert wird.

Eine bevorzugte Ausgestaltung der Erfindung sieht vor, daß das Sperrglied mit mindestens einem der Arretierelemente des Bandteils in Blockiereingriff tritt, vorzugsweise auf der zur Sperre entgegengesetzten Seite des Arretierelements oder eines anderen Arretierelements und in Zugrichtung hinter der Sperre, so daß es ohne weitere konstruktive Maßnahmen am Bandteil selbst möglich ist, im Spannschloß sowohl eine Bewegung in Zugrichtung als auch entgegengesetzt dazu zu blockieren. Die beidseitig wirkenden Arretierelemente werden zweckmäßig von Stegen gebildet, die im Abstand von einander quer zur Längsrichtung des Bandteils verlaufen und zwei durchgehende Längsseitenränder desselben verbinden. Grundsätzlich ist es jedoch aber auch möglich, an Stelle der Arretierelemente zusätzliche Rastelemente am Bandteil anzubringen, die mit dem Sperrglied in Blockiereingriff treten, um eine weitere Verengung des vom Bandteil umschlossenen Auges zu verhindern. In diesem Fall sind die Rastelemente und die Arretierelemente zweckmäßig auf entgegengesetzten Seiten des Bandteils angeordnet und bestehen aus Zähnen mit unterschiedlich steilen Flanken, von denen im Eingriffszustand jeweils die steileren mit dem Sperrglied bzw. der Sperre zusammenwirken und den Bandteil festhalten.

Bei einer Anbringung des Sperrglieds zwischen den Gegenständen und dem Spannschloß bzw. der Innenseite des Bandteils ist das Sperrglied vorzugsweise schwenkbar mit dem Spannschloß verbunden, so daß sich ein im Abstand vom Schwenkpunkt angeordneter Eingriffsteil durch die auf das Sperrglied einwirkende Reaktionskraft zwischen jeweils benachbarte Arretier- oder Rastelemente bewegen läßt. Das Sperrglied und das Spannschloß können getrennt oder vorzugsweise einstückig ausgebildet sein, wobei die Schwenkverbindung zwischen dem Sperrglied und dem Spannschloß im zuerst genannten Fall beispielsweise ein Lager und Lagerzapfen umfassen und im zuletzt genannten Fall als Filmscharnier ausgebildet sein kann.

Um einen vorzeitigen Blockiereingriff zwischen dem Sperrglied und dem Bandteil zu verhindern, ist der Eingriffsteil vorzugsweise an dem zum Schwenkpunkt entgegengesetzten Ende des Sperrglieds angeordnet, so daß der Schwenkweg des Eingriffsteils größer als der Schwenkweg eines mit den Gegenständen in Berührung tretenden Mittelteils des Sperrglieds ist, wodurch es möglich ist, den Eingriffsteil vor dem Anschlagen der Gegenstände gegen das Sperrglied in einem verhältnismäßig großen Abstand vom Bandteil zu halten, so daß er das Hindurchziehen des Bandteils durch das Spannschloß nicht behindert, bevor es nicht zu einer allseitigen Anlage zwischen dem Bandteil und den Gegenständen kommt.

Weiter kann zu diesem Zweck zwischen dem Spannschloß und dem Sperrglied auch ein Raste vorgesehen sein, die eine gegenseitige Annäherung des Bandteils und des Sperrglieds verhindert, bis von den Gegenständen eine vorgegebene Reaktionskraft auf das Sperrglied oder den Bandteil ausgeübt wird, die ausreicht, um einen dem Sperrglied von der Raste entgegengesetzten Widerstand zu überwinden.

Bei einer Anbringung des Sperrglieds auf der von den Gegenständen abgewandten Außenseite des Bandteils ist das Sperrglied vorzugsweise starr mit dem Spannschloß verbunden und wird zweckmäßig von einer Sperrnase gebildet, die in Richtung des Bandteils übersteht, so daß sie zwischen zwei benachbarte Arretierelemente eindringt, wenn der Bandteil von den Gegenständen nach außen gedrückt wird. Vorzugsweise weist das Spannschloß eine Durchtrittsöffnung für den Bandteil auf, die an ihren entgegengesetzten Enden zweckmäßig mit Führungsschrägen versehen ist, welche den Bandteil im Abstand vom Sperrglied halten und einen vorzeitigen Blockiereingriff des letzteren verhindern, wenn man den Bandteil gegen die Führungsschrägen anliegend durch das Spannschloß zieht.

Zweckmäßig ist nur eine verhältnismäßig geringe Reaktionskraft erforderlich, um den Bandteil und das Sperrglied miteinander in Blockiereingriff zu bringen, wobei der Betrag der Reaktionskraft vorteilhafterweise in Abhängigkeit von der Art der Gegenstände und deren Festigkeit so gewählt ist, daß er kleiner als eine zu unerwünschten Verformungen, insbesondere zu einem unerwünschten Zusammenquetschen derselben führende Kraft ist.

Im folgenden wird die Erfindung anhand einiger in der Zeichnung dargestellter Ausführungsbeispiele näher erläutert. Es zeigen:
- Fig. 1:: eine Schnittansicht entlang der Längsachse eines maßgeblichen Teils eines um ein Wellrohrbündel herumgeschlungenen erfindungsgemäßen Spannbandes, bevor dieses rundum eng gegen das Rohrbündel anliegt und ein Sperrglied des Spannbandes eine weitere Verengung des vom Bandteil umschlossenen Auges verhindert;
- Fig. 2:: eine Ansicht entsprechend Fig. 1, jedoch nachdem das Spannband rundum eng gegen das Rohrbündel anliegt und das Sperrglied eine weitere Verengung des vom Bandteil umschlossenen Auges verhindert;
- Fig. 3:: eine Ansicht entsprechend Fig. 1 bei einer anderen Ausführungsform eines erfindungsgemäßen Spannbandes;
- Fig. 4:: eine Ansicht entsprechend Fig. 2 bei der Ausführungsform der Fig. 3;
- Fig. 5:: eine Ansicht entsprechend Fig. 2 bei noch einer anderen Ausführungsform eines erfindungsgemäßen Spannbandes;
- Fig. 6:: eine weitere Variante für ein Spannband mit einem beweglichen Fußteil.

Die in der Zeichnung dargestellten Spannbänder 100, 200, 300 sind hier jeweils einstückig durch Spritzgießen aus einem elastischen Kunststoffmaterial hergestellt und bestehen im wesentlichen aus einem langgestreckten Bandteil 101, 201, 301 und einem am einen Ende des Bandteils 101, 201, 301 angeformten Spannschloß 102, 202, 302, das eine im Querschnitt rechteckige, auf allen vier Seiten von Begrenzungswänden umgebene Durchtrittsöffnung 104, 204, 304 für den Bandteil 101, 201, 301 aufweist.

Der Bandteil 101, 201, 301 weist im Querschnitt einen im wesentlichen rechteckigen Umriß mit einer inneren und einer äußeren Breitseite 105, 205, 305 bzw. 106, 206, 306 auf und verjüngt sich an seinem freien, nicht mit dem Spannschloß 102, 202, 302 verbundenen Ende (nicht dargestellt) zu einer abgerundeten Spitze, um das Einführen des freien Endes des Bandteils 101, 201, 301 in die Durchtrittsöffnung 104, 204, 304 des Spannschlosses 202, 302, 402 zu erleichtern.

Der Abstand zwischen den beiden zu den Schmalseiten des Bandteils 101, 201, 301 benachbarten Begrenzungswänden der Durchtrittsöffnung 104, 204, 304 ist geringfügig kleiner als die Breite des Bandteils 101, 201, 301, so daß sich dieser leicht durch die Öffnung 104, 204, 304 hindurchziehen läßt, wobei seine Schmalseiten von den benachbarten Begrenzungswänden der Durchtrittsöffnung 104, 204, 304 geführt werden und eine seitliche Verschiebung des Bandteils 101, 201, 301 verhindern.

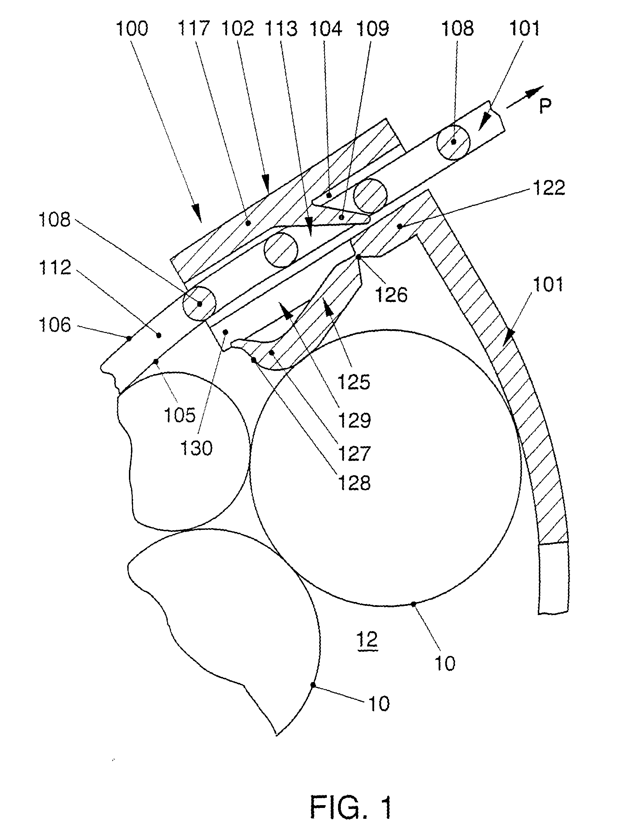

Zwischen den beiden Enden, d.h. von einer Stelle kurz hinter dem Spannschloß 102, 202, 302 bis zu einer Stelle kurz vor der Verjüngung des freien Endes ist der Bandteil 101, 201, 301 mit einer Mehrzahl im Abstand hintereinander angeordneten Arretierelementen 108, 208, 308 versehen, die beim Hindurchziehen des Bandteils 101, 201, 301 durch die Durchtrittsöffnung 104, 204, 304 des Spannschlosses 102, 202, 302 nacheinander mit einer innerhalb der Durchtrittsöffnung 104, 204, 304 angeordneten elastisch nachgiebigen Sperre 109, 209, 309 zusammenwirken, um zu verhindern, daß sich der Bandteil 101, 201, 301 entgegen einer Zugrichtung (Pfeil P) beim Festziehen des Spannbandes 100, 200, 300 durch das Spannschloß 102, 202, 302 zurückbewegt und sich ein vom Bandteil 101, 201, 301 umschlossenes, von einer Mehrzahl von längsgeschlitzten Wellrohren 10 (nur schematisch angedeutet) durchsetztes Auge 12 von selbst wieder erweitert.
Bei den in den Figuren 1 bis 4 dargestellten Ausführungsbeispielen sind die Arretierelemente in Form von Arretierstegen 108, 208 mit kreisförmigem Querschnitt ausgebildet, welche zwei zueinander parallele Längsseitenränder 112, 212 des Spannbandes 100, 200 im Abstand voneinander leiterstufenartig verbinden, wobei sie quer zu einer Längsachse des Bandteils 101, 201 verlaufen und zusammen mit den Längsseitenrändern 112, 212 Blockieröffnungen 113, 213 für den Blockiereingriff der Sperre 109, 209 begrenzen.

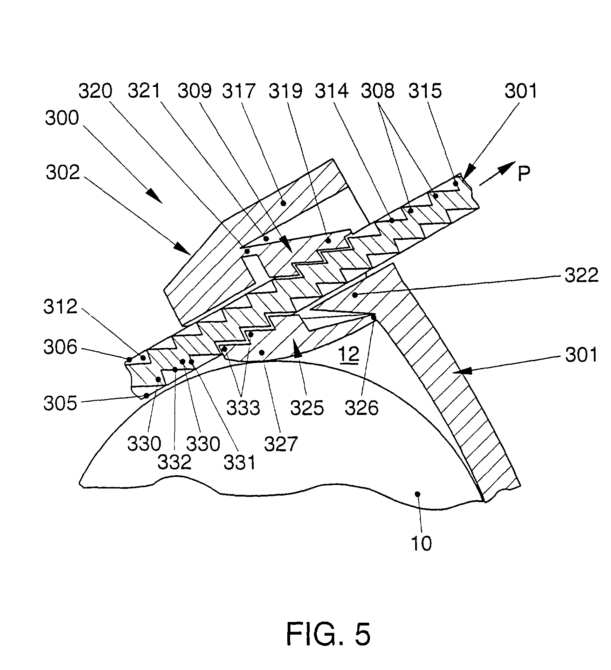

Im Unterschied dazu werden die Arretierelemente bei dem in Fig. 5 dargestellten Spannband 300 von hintereinanderliegenden stegförmigen Arretierzähnen 308 gebildet, die ohne Abstand versenkt auf der der Sperre 309 gegenüberliegenden äußeren Breitseite 306 des Bandteils 301 angeordnet sind. Die zwischen zwei durchgehenden Längsseitenrändern 312 des Bandteils 301 quer zu dessen Längsachse verlaufenden Arretierzähne 308 weisen jeweils eine unter einem Winkel von 45 Grad gegenüber der Längsachse geneigte flache Flanke 314 und eine zur Längsachse im wesentlichen senkrechte steile Flanke 315 auf.

Die Sperre 109, 209, 309 ist jeweils an die Form der Arretierelemente 108, 208, 308 angepaßt und weist bei den in den Figuren 1 bis 4 dargestellten Ausführungsbeispielen die Form einer zu ihrem freien Ende hin verjüngten stegförmigen Nase auf, die unter einem spitzen Winkel zur Zugrichtung des Bandteils 101, 201 nach innen zu über die der äußeren Breitseite 106, 206 des Bandteils 101, 201 zugewandte äußere Begrenzungswand 117, 217 der Durchtrittsöffnung 104, 204 übersteht, wobei ihre Breite kleiner als diejenige der Blockieröffnungen 113, 213 ist. Die Abmessungen der Nase 109, 209 und der Durchtrittsöffnung 104, 204 im Bereich der Nase 109, 209 sind so gewählt, daß die Nase 109, 209 beim Hindurchziehen des Bandteils 101, 201 durch die Durchtrittsöffnung 104, 204 ohne großen Kraftaufwand von den Arretierstegen 108, 208 elastisch in Richtung der äußeren Begrenzungswand 117, 217 ausgelenkt wird, so daß sich die Arretierstege 108, 208 an der Nase 109, 209 vorbeibewegen lassen. Nach dem Passieren eines Arretierstegs 108, 208 bewegt sich die Nase 109, 209 infolge ihrer elastischen Rückstellkraft wieder in die in den Figuren 1 bis 4 dargestellte Ruhestellung zurück, in der sie in die Blockieröffnung 113, 213 zwischen zwei benachbarten Arretierstegen 108, 208 eingreift und eine Rückwärtsbewegung des Bandteils 101, 201 entgegen der Zugrichtung blockiert.

Demgegenüber besteht die Sperre 309 bei dem in Fig. 5 dargestellten Ausführungsbeispiel aus einem Klemmkörper, der mit drei zu den Arretierzähnen 308 komplementären Haltezähnen 319 mit steilen und flachen Flanken versehen ist, so daß die Haltezähne 319 und die Arretierzähne 308 formschlüssig ineinandergreifen, wobei im Eingriffszustand (Fig. 5) jeweils die steilen und flachen Flanken der Arretier- und Haltezähne 308 bzw. 319 paarweise gegeneinander anliegen. Der Klemmkörper 309 ist auf einer der äußeren Breitseite 306 des Bandteils 301 zugewandten äußeren Begrenzungswand 317 der Durchtrittsöffnung 304 angeformt, wobei die Verbindung zwischen dem Klemmkörper 309 und der Begrenzungswand 317 von einem schmalen Fuß 320 gebildet wird, der im Bereich einer Querschnittserweiterung der Durchtrittsöffnung 304 angeordnet ist. An seinen entgegengesetzten Schmalseiten ist der Klemmkörper 309 (ebenso wie die Nase 109, 209 bei den zuvor beschriebenen Ausführungsbeispielen) durch einen Spalt (nicht sichtbar) von den benachbarten, den Schmalseiten des Bandteils 101, 201, 301 gegenüberliegenden Begrenzungswänden der Durchtrittsöffnung 304 getrennt. Zwischen der dem Bandteil 301 abgewandten Rückseite des Klemmkörpers 309 und der Begrenzungswand 317 wird ein keilförmiger Spalt 321 gebildet, so daß wie bei der Nase 109, 209 Platz für eine elastische Auslenkung vorhanden ist. Die durch die Auslenkung des Klemmkörpers 309 hervorgerufene elastische Verformung des Fußes 320 bewirkt zusammen mit der entgegen der Zugrichtung wirkenden Zugspannung im Bandteil 301, daß sich der Klemmkörper 309 nach einem Loslassen des vorderen Endes des Bandteils 301 zurückbiegt, wobei sich die Haltezähne 319 mit drei hintereinanderliegenden Arretierzähnen 308 des Bandteils 301 verhaken und in die Vertiefungen zwischen diesen gedrückt werden, so daß der Bandteil 301 zwischen dem Klemmkörper 309 und einer der Breitseite 305 des Bandteils 301 gegenüberliegenden inneren Begrenzungswand 322 der Durchtrittsöffnung 304 ohne die Möglichkeit eines Ausweichens festgehalten wird.

Die Spannbänder 100, 200, 300 weisen weiter ein einstückig am Spannschloß 102, 202, 302 angeformtes Sperrglied 125, 225, 325 auf, das mit dem Bandteil 101, 201, 301 in Blokkiereingriff tritt und eine weitere Verengung des vom Bandteil 101, 201, 301 umschlossenen und von den Wellrohren 10 durchsetzten Auges 12 verhindert, wenn der Bandteil 101, 201, 301 die Wellrohre 10 eng anliegend umgibt.

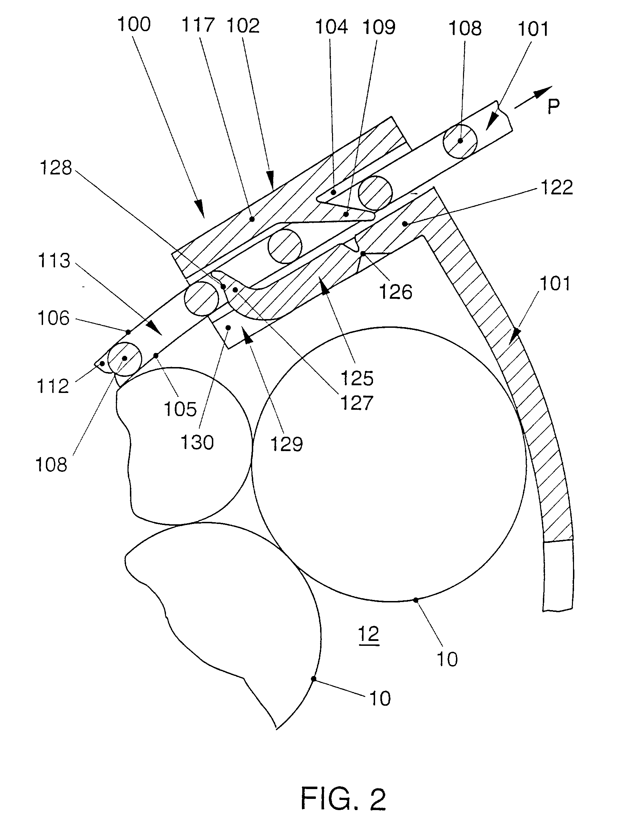

Bei dem in den Figuren 1 und 2 dargestellten Ausführungsbeispiel wird das Sperrglied 125 von einem Sperrhebel gebildet, der auf der den Wellrohren 10 zugewandten Innenseite des Spannschlosses 102 in einer in Längsrichtung des Spannschlosses 102 verlaufenden Ausnehmung 129 in der inneren Begrenzungswand 122 angeordnet und an seinem in Zugrichtung des Bandteils 101 weisenden Ende über ein Filmscharnier 126 einstückig mit dem Spannschloß 102 verbunden ist. Der Sperrhebel 125 weist eine Breite auf, die etwas kleiner als der Abstand der parallelen Längsseitenränder 112 des Bandteils 101 ist, so daß ein an dem vom Filmscharnier 126 abgewandten freien Ende vorgesehener Eingriffsteil 127 in die Blockieröffnungen 113 zwischen den Arretierstegen 108 des Bandteils 101 verschwenkt werden kann (Fig. 2). Der Eingriffsteil 127 ist nach außen in Richtung des Bandteils 101 abgebogen und weist an seiner im Eingriffszustand (Fig. 2) zur Zugrichtung des Bandteils 101 entgegengesetzten Seite eine konkave Einwölbung 128 auf, gegen welche im Eingriffszustand die in Zugrichtung weisende konvexe Begrenzungsfläche eines Arretierstegs 108 des Bandteils 101 anschlägt und eine weitere Bewegung des Bandteils 101 in Zugrichtung verhindert.

Der Sperrhebel 125 ist so am Spannschloß 102 angeformt, daß er ohne eine äußere Krafteinwirkung aus der Ausnehmung 129 des Spannschlosses 102 heraus nach innen, d.h. in Richtung der Wellrohre bzw. des vom Spannschloß 102 ausgehenden Spannbandes 101 ausgelenkt ist (Fig. 1), wobei der Abstand zwischen dem Eingriffsteil 127 und dem Bandteil 101 ausreichend groß gewählt ist, um einen unbeabsichtigten Blockiereingriff zu verhindern. Eine Bewegung des durch das Spannschloß 102 hindurchtretenden Bandteils 101 in Richtung des Sperrhebels, die ebenfalls zu einem unbeabsichtigten Blockiereingriff führen könnte, wird durch Teile 130 der inneren Begrenzungswand 127 verhindert, die sich im Bereich der Ausnehmung 129 im Abstand gegenüberliegen und die Längsseitenränder 112 des Bandteils 101 auf ihrer den Wellrohren 10 zugewandten Seite übergreifen.

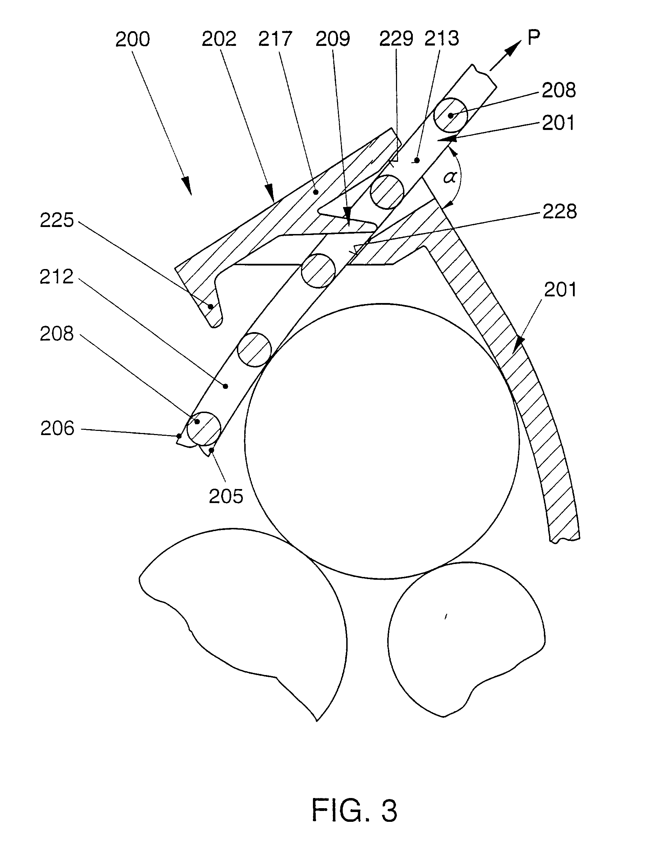

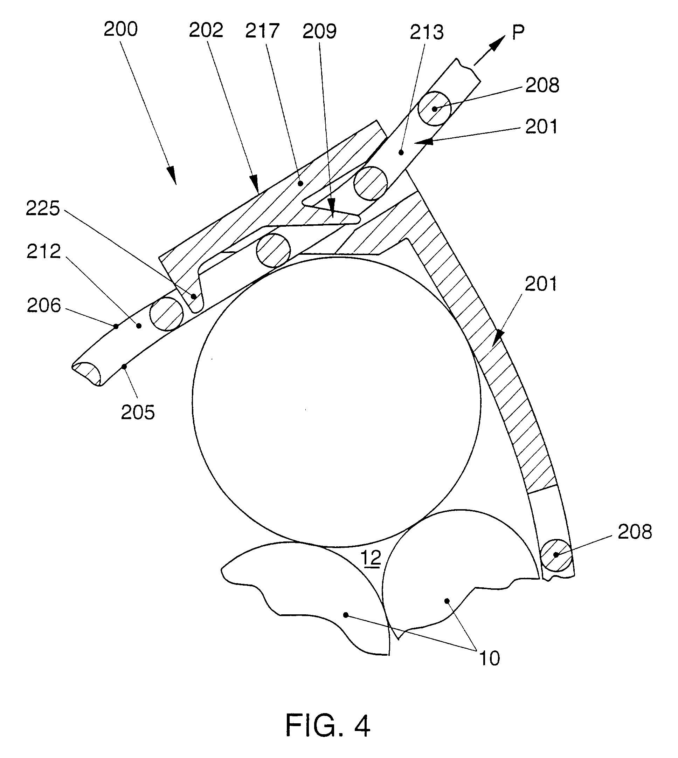

Zum Bündeln einer Anzahl von Wellrohren 10 oder dergleichen wird das Spannband 100 vorzugsweise mit dem Spannschloß 102 nach oben um die Wellrohre 10 herumgelegt, so daß diese nicht auf den Sperrhebel 125 drücken. Das freie Ende des Bandteils 101 wird durch die Durchtrittsöffnung 104 des Spannschlosses 102 hindurchgeschoben und dann eine Zugkraft in Richtung des Pfeils P aufgebracht, so daß sich der Querschnitt des vom Bandteil 101 umschlossenen Auges 12 verringert. Dabei legt sich der Bandteil 101, 201, 301 von außen her gegen die Wellrohre 10 an und verschiebt diese innerhalb des Auges 12 etwas, bis nach einer allseitigen Anlage des Bandteils 101 gegen die Wellrohre 10 das dem Spannschloß 102 benachbarte Wellrohr 10 gegen den Sperrhebel 125 drückt und diesen um das Filmscharnier 126 als Schwenkpunkt nach außen verschwenkt, so daß sich sein Eingriffsteil 127 dem im Spannschloß 102 geführten Bandteil 101 nähert und sich schließlich zwischen zwei Arretierstege des Bandteils 101 bewegt, wodurch eine weitere Bewegung des Bandteils 101 in Zugrichtung blockiert wird (Fig. 2). Im Unterschied dazu wird das Sperrglied bei dem in den Figuren 3 und 4 dargestellten Ausführungsbeispiel von einer Sperrnase 225 gebildet, die an dem zur Zugrichtung entgegengesetzten Ende des Spannschlosses 202 starr an einem äußeren Teil des Spannschlosses 202 angeformt ist und nach innen in Richtung des Bandteils 201 übersteht. Die Breite der überstehenden Sperrnase 225 ist wieder so gewählt, daß sie kleiner als die Breite der von den Arretierstegen 208 und den Längsseitenrändern 212 des Bandteils 201 umschlossenen Blockieröffnungen 213 ist, so daß sie in eine der Blockieröffnungen 213 eingreift, wenn der Bandteil 201 von einem dem Spannschloß 202 benachbarten Wellrohr 10 aus der in Fig. 3 dargestellten Stellung nach außen in Richtung der Sperrnase 225 gedrückt wird und mit dieser in Blockiereingriff gebracht wird (Fig. 4).

Bei diesem Ausführungsbeispiel wird ein frühzeitiger Eingriff zwischen der Sperrnase 225 und dem Bandteil 201 durch zwei den Breitseiten 205, 206 des Bandteils 201 zugewandte schräge Führungsflächen 228, 229 innerhalb der Durchtrittsöffnung 204 des Spannschlosses 202 verhindert. Die beiden parallelen Führungsflächen 229, 228 sind unter einem spitzen Winkel zu einer Längsachse des Spannschlosses 202 bzw. von dessen Durchtrittsöffnung 204 auf einer äußeren und einer inneren Begrenzungswand 217 bzw. 222 der Durchtrittsöffnung 204 angeordnet, wobei die Führungsfläche 209 auf der äußeren Begrenzungswand 217 am Austrittsende der Durchtrittsöffnung 204 angeordnet ist, während die Führungsfläche 228 auf der inneren Begrenzungswand 222 am Eintrittsende der Durchtrittsöffnung 204 angeordnet ist. Die Führungsflächen 228, 229 bewirken, daß der Bandteil 201 im Abstand von der Sperrnase 225 gehalten wird, wenn die Zugrichtung gegenüber dem an das Spannschloß 202 angrenzenden Abschnitt des Spannbandes 201 unter einem stumpfen Winkel Ä verläuft. Erst wenn der Bandteil 201 allseitig eng gegen die Wellrohre 10 anliegt, drückt das dem Spannschloß 202 benachbarte Wellrohr 10 den Bandteil 201 im Bereich des Spannschlosses 202 in Richtung der Sperrnase 225 und bringt ihn mit dieser in Blockiereingriff (Fig. 4), wodurch eine weitere Bewegung des Bandteils 201 in Zugrichtung verhindert wird.

Bei dem in Fig. 5 dargestellten Ausführungsbeispiel besteht das Sperrglied 325 ähnlich wie beim Ausführungsbeispiel der Figuren 1 und 2 aus einem auf der Innenseite des Spannschlosses 302 angeordneten Sperrhebel, der über ein Filmscharnier 326 schwenkbar mit dem Spannschloß 302 verbunden ist. Im Unterschied zu dem Ausführungsbeispiel der Figuren 1 bis 4 steht ein Eingriffsteil 327 des Sperrhebels 325 im Eingriffszustand (Fig. 5) mit Rastzähnen 330 im Blockiereingriff, die versenkt auf der zu den Arretierzähnen 308 entgegengesetzten Breitseite 305 des Bandteils 301 vorgesehen sind, dessen beide Längsseitenränder 312 verbinden und wie die Arretierzähne 308 eine steile und eine flache Flanke 331 und 332 besitzen. Im Gegensatz zu den Arretierzähnen 308 weist die steile Flanke 331 der Rastzähne 330 jedoch in Zugrichtung des Bandteils 301.

Der am freien, zum Filmscharnier 326 entgegengesetzten Ende des Sperrhebels 325 angeordnete Eingriffsteil 327 weist eine ähnliche Ausbildung wie der Klemmkörper 309 auf, d.h. er ist mit drei zu den Rastzähnen 330 komplementären Haltezähnen 333 versehen, die im Eingriffszustand formschlüssig mit drei Rastzähnen 330 zusammenpassen, wobei sich jeweils die steilen und die flachen Flanken 331 bzw. 332 paarweise gegenüberliegen und eine Bewegung des Bandteils 301 in Zugrichtung verhindern.

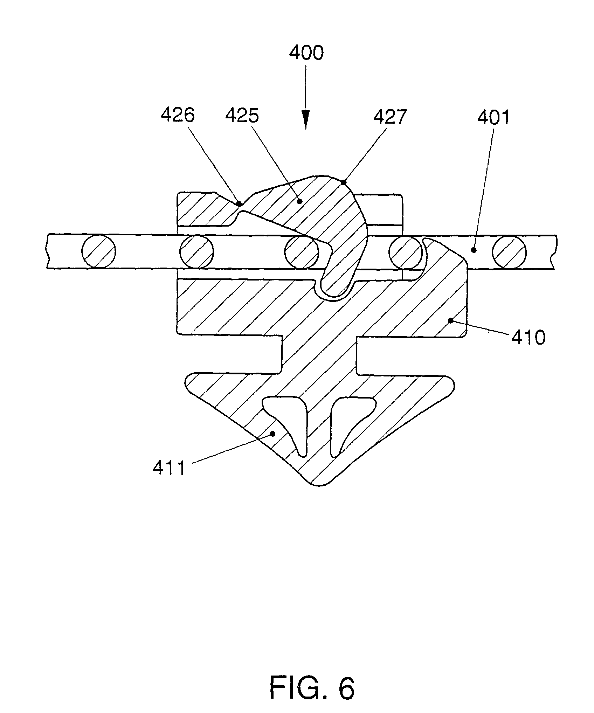

Das Ausführungsbeispiel in Figur 6 zeigt für eine Spannbandkonfiguration 400 ein auszugsweise dargestelltes Bandteil 401, das abweichend von den vorstehend beschriebenen Varianten einen separaten Fußteil 410 aufweist, dem auch das Spannschloß 402 zugeordnet ist. Ebenso gehört zum Fußteil 410 ein Befestigungselement 411, welches nach Art eines Clipses (siehe Zeichnung), einer Klammer, eines Stehbolzens, einer Gewindebohrung, eines Schraubbolzens oder dergleichen ausgebildet sein kann, um beispielsweise Befestigungen an Aufnahmekörpern wie einem Karosserieaufbau eines Fahrzeugs oder einzelnen Komponenten und Aggregaten desselben zu ermöglichen. Das Sperrglied 425 ist ebenfalls über ein Filmscharnier 426 verschwenkbar, wenn es über einen Anlagerücken 427 von einem hier nicht weiter dargestellten Gegenstand beim Zuziehen des Spannbandes 400 mit schloßeinwärts gerichteten Kräften beaufschlagt wird.

## Patentansprüche

1. Spannband zum Bündeln und/oder zur Halterung wenigstens eines langgestreckten Gegenstandes mit einem mit Arretierelementen versehenen, langgestreckten biegsamen Bandteil (101, 201, 301, 401) und einem Spannschloß (102, 202, 302) zum Arretieren des um den Gegenstand herumgeschlungenen und gegen diesen anliegenden Bandteils im Spannschloß durch gegenseitigen Eingriff zwischen einer Sperre des Spannschlosses und mindestens einem der Arretierelemente des Bandteils, wobei der gegenseitige Eingriff eine Erweiterung eines vom Bandteil umschlossenen und von dem wenigstens einen Gegenstand durchsetzten Auges verhindert, sowie mit einem zusätzlichen Sperrglied (125, 225, 325, 425), das durch eine gegenseitige Annäherung des Bandteils und des Sperrgliedes infolge einer von dem Gegenstand auf den Bandteil oder das Sperrglied ausgeübten Kraft mit dem Bandteil in Eingriff tritt, sobald der Bandteil den wenigstens einen Gegenstand eng anliegend umgibt, und das an seiner zur Zugrichtung des Bandteils entgegengesetzten Seite mindestens eine Anschlagfläche aufweist, die bei einem Eingriff zwischen dem Sperrglied und dem Bandteil gegen eine in Zugrichtung weisende komplementäre Anschlagfläche von einem oder mehreren der Arretierelemente oder von einem oder mehreren zusätzlichen Rastelementen des Bandteils anschlägt, **dadurch gekennzeichnet, daß** die komplementären Anschlagflächen so ausgebildet sind, daß sie beim gegenseitigen Anschlagen eine weitere Bewegung des Bandteils (101, 201, 301, 401) in Zugrichtung blockieren und eine weitere Verengung des vom Bandteil (101, 201, 301, 401) umschlossenen Auges (12) verhindern.

2. Spannband nach Anspruch 1, **dadurch gekennzeichnet, daß** das Spannschloß an wenigstens einem Ende des Bandteils (101, 202, 301) angebracht ist.

3. Spannband nach Anspruch 1 oder 2, **dadurch gekennzeichnet, daß** das Spannschloß wenigstens einem Fußteil (410) zugeordnet ist, das zur Befestigung an einem Aufnahmekörper hergerichtet ist.

4. Spannband nach Anspruch 3, **dadurch gekennzeichnet, daß** das Fußteil materialeinheitlich einteilig angeformt ist.

5. Spannband nach Anspruch 3, **dadurch gekennzeichnet, daß** das Fußteil (410) gegenüber dem Bandteil (401) beweglich ist.

6. Spannband nach Anspruch 1, **dadurch gekennzeichnet, daß** das Sperrglied (125, 225, 325) im Bereich des Spannschlosses vorgesehen ist.

7. Spannband nach Anspruch 4 oder 5, **dadurch gekennzeichnet, daß** das Sperrglied (425) dem Fußteil (410) zugeordnet ist.

8. Spannband nach einem der Ansprüche 1 bis 7, **dadurch gekennzeichnet, daß** die Arretierelemente von Stegen (108, 208) gebildet werden, die im Abstand voneinander quer zu einer Längsrichtung des Bandteils (101, 201) verlaufen.

9. Spannband nach Anspruch 8, **dadurch gekennzeichnet, daß** die Stege (108, 208) zwei durchgehende Längsseitenränder (112, 212) des Bandteils (101, 201) verbinden und Blockieröffnungen (113, 213) zur Aufnahme der Sperre (109, 209) und des Sperrglieds (125, 225) begrenzen.

10. Spannband nach Anspruch 1, **dadurch gekennzeichnet, daß** die Arretierelemente (308) und die Rastelemente (330) auf entgegengesetzten Längsseiten des Bandteils (303) angeordnet sind.

11. Spannband nach Anspruch 10, **dadurch gekennzeichnet, daß** die Arretierelemente (308) und die Rastelemente (330) als Zähne mit einer steileren und einer flacheren Flanke (315, 331; 314, 332) ausgebildet sind.

12. Spannband nach Anspruch 11 **dadurch gekennzeichnet, daß** die steileren Flanken (315, 331) der Arretierzähne (308) und der Rastzähne (330) im wesentlichen in entgegengesetzte Richtungen weisen.

13. Spannband nach einem der Ansprüche 1 bis 12, **dadurch gekennzeichnet, daß** das Sperrglied (125, 325) auf einer den Gegenständen (10) zugewandten Innenseite des Spannschlosses (102, 302) angeordnet ist und von den Gegenständen (10) nach außen in Eingriff mit dem Bandteil (101, 301) gedrückt wird.

14. Spannband nach Anspruch 13, **dadurch gekennzeichnet, daß** das Sperrglied (125, 325) ohne eine äußere Krafteinwirkung nach innen über die Innenseite des Spannschlosses (102, 302) übersteht.

15. Spannband nach Anspruch 13 oder 14, **dadurch gekennzeichnet, daß** das Sperrglied (125, 325) schwenkbar mit dem Spannschloß (102, 302) verbunden ist und mit einem im Abstand vom Schwenkpunkt angeordneten Eingriffsteil (127, 327) zwischen mindestens zwei benachbarte Arretier- oder Rastelemente (108, 308) des Bandteils (101, 301) eingreift.

16. Spannband nach Anspruch 15, **dadurch gekennzeichnet, daß** das Sperrglied (125, 325) über ein Filmscharnier (126, 326) mit dem Spannschloß (125, 325) verbunden ist.

17. Spannband nach einem der Ansprüche 1 bis 16, **dadurch gekennzeichnet, daß** das Sperrglied (225) außerhalb des vom Bandteil (201) umschlossenen Auges (12) angeordnet ist, und daß der Bandteil (201) von den das Auge (12) durchsetzenden Gegenständen (10) nach außen in Blockiereingriff mit dem Sperrglied (225) gedrückt wird.

18. Spannband nach Anspruch 17, **dadurch gekennzeichnet, daß** das Sperrglied (225) starr mit dem Spannschloß (202) verbunden ist.

19. Spannband nach Anspruch 17 oder 18, **dadurch gekennzeichnet, daß** das Sperrglied von einer nach innen in Richtung des Bandteils (201) über einen Teil des Spannschlosses (202) überstehenden Sperrnase (225) gebildet wird.

20. Spannband nach einem der Ansprüche 17 bis 19, **dadurch gekennzeichnet, daß** das Spannschloß (202) mindestens eine Führung (228, 229) für den Bandteil (201) aufweist, die den an der Führung entlangbewegten Bandteil (201) im Abstand vom Sperrglied (225) hält.

21. Spannband nach einem der Ansprüche 1 bis 20, **dadurch gekennzeichnet, daß** das Spannband (100, 200, 300) einstückig ausgebildet ist und aus einem Kunststoffmaterial besteht.

22. Spannband nach einem der Ansprüche 1 bis 21, **dadurch gekennzeichnet, daß** das Spannschloß (102, 202, 302) eine Durchtrittsöffnung (104, 204, 304) für den Bandteil (101, 201, 301) aufweist.

23. Spannband nach Anspruch 22, **dadurch gekennzeichnet, daß** die Sperre (109, 209, 309) in der Durchtrittsöffnung (104, 204, 304) angeformt ist.

24. Spannband nach einem der Ansprüche 1 bis 23, **dadurch gekennzeichnet, daß** sich der Bandteil (101, 201, 301) in Zugrichtung zuerst am Sperrglied (125, 225, 325) und dann an der Sperre (109, 209, 309) vorbeibewegt.

25. Spannband nach einem der Ansprüche 1 bis 24, **dadurch gekennzeichnet, daß** die Sperre (109, 209, 309) beim Hindurchbewegen des Bandteils (101, 201, 301) durch die Durchtrittsöffnung (104, 204, 304) von den Arretierelementen (108, 208, 308) elastisch verformt wird.

26. Spannband nach Anspruch 1, **dadurch gekennzeichnet, daß** das Bandteil (101, 202) leiterförmig ausgebildet ist.

27. Spannband nach Anspruch 1, **dadurch gekennzeichnet, daß** das Bandteil (301) sägezahnartig ist.

## Claims

1. Tensioning strap for forming into bundles and/or for securing at least one elongate object, having an elongate, flexible strap part (101, 201, 301, 401) which is provided with arresting elements, and having a tensioning lock (102, 202, 302) for arresting the strap part, wound around the object and butting against the same, in the tensioning lock by mutual engagement between a catch of the tensioning lock and at least one of the arresting elements of the strap part, the mutual engagement preventing widening of an eyelet which is enclosed by the strap part and through which the at least one object passes, and having an additional blocking element (125, 225, 325, 425) which, by virtue of the strap part and the blocking element being made to advance towards one another as a result of a force exerted on the strap part or the blocking element by the object, comes into engagement with the strap part as soon as the strap part surrounds the at least one object in a closely abutting manner, and which, on its opposite side in relation to the pulling direction of the strap part, has at least one stop surface which, in the event of engagement between the blocking element and the strap part, strikes against a complementary stop surface which is oriented in the pulling direction and belongs to one or more of the arresting elements or to one or more additional latching elements of the strap part, **characterized in that** the complementary stop surfaces are designed such that, when they strike against one another, they block further movement of the strap part (101, 201, 301, 401) in the pulling direction and prevent further narrowing of the eyelet (12), which is enclosed by the strap part (101, 201, 301, 401).

2. Tensioning strap according to Claim 1, **characterized in that** the tensioning lock is fitted at at least one end of the strap part (101, 201, 301).

3. Tensioning strap according to Claim 1 or 2, **characterized in that** the tensioning lock is assigned to at least one foot part (410), which is intended for fastening on a receiving body.

4. Tensioning strap according to Claim 3, **characterized in that** the foot part is an integrally formed component.

5. Tensioning strap according to Claim 3, **characterized in that** the foot part (410) can be moved with respect to the strap part (401).

6. Tensioning strap according to Claim 1, **characterized in that** the blocking element (125, 225, 325) is provided in the region of the tensioning lock.

7. Tensioning strap according to Claim 4 or 5, **characterized in that** the blocking element (425) is assigned to the foot part (410).

8. Tensioning strap according to one of Claims 1 to 7, **characterized in that** the arresting elements are formed by crosspieces (108, 208) which run, at a distance apart from one another, transversely with respect to a longitudinal direction of the strap part (101, 201).

9. Tensioning strap according to Claim 8,
**characterized in that** the crosspieces (108, 208) connect two continuous longitudinal side borders (112, 212) of the strap part (101, 201) and delimit blocking openings (113, 213) for receiving the catch (109, 209) and the blocking element (125, 225).

10. Tensioning strap according to Claim 1, **characterized in that** the arresting elements (308) and the latching elements (330) are arranged on opposite longitudinal sides of the strap part (303).

11. Tensioning strap according to Claim 10, **characterized in that** the arresting elements (308) and the latching elements (330) are designed as teeth with a steeper flank and a shallower flank (315, 331; 314, 332).

12. Tensioning strap according to Claim 11, **characterized in that** the steeper flanks (315, 331) of the arresting teeth (308) and of the latching teeth (330) are oriented in essentially opposite directions.

13. Tensioning strap according to one of Claims 1 to 12, **characterized in that** the blocking element (125, 325) is arranged on an inner side, facing the objects (10), of the tensioning lock (102, 302) and is forced outwards into engagement with the strap part (101, 301) by the objects (10).

14. Tensioning strap according to Claim 13, **characterized in that**, if no external force is exerted, the blocking element (125, 325) projects inwards beyond the inner side of the tensioning lock (102, 302).

15. Tensioning strap according to Claim 13 or 14, **characterized in that** the blocking element (125, 325) is connected pivotably to the tensioning lock (102, 302) and engages, by means of an engagement part (127, 327) arranged at a distance from the pivot point, between at least two adjacent arresting or latching elements (108, 308) of the strap part (101, 301).

16. Tensioning strap according to Claim 15, **characterized in that** the blocking element (125, 325) is connected to the tensioning lock (102, 302) via a film hinge (126, 326).

17. Tensioning strap according to one of Claims 1 to 16, **characterized in that** the blocking element (225) is arranged outside the eyelet (12), which is enclosed by the strap part (201), and **in that** the strap part (201) is forced outwards into blocking engagement with the blocking element (225) by the objects (10), which pass through the eyelet (12).

18. Tensioning strap according to Claim 17, **characterized in that** the blocking element (225) is connected rigidly to the tensioning lock (202).

19. Tensioning strap according to Claim 17 or 18, **characterized in that** the blocking element is formed by a blocking nose (225) which projects inwards, in the direction of the strap part (201), beyond part of the tensioning lock (202).

20. Tensioning strap according to one of Claims 17 to 19, **characterized in that** the tensioning lock (202) has at least one guide (228, 229) for the strap part (201), said guide maintaining a distance between the blocking element (225) and the strap part (201) moved along the guide.

21. Tensioning strap according to one of Claims 1 to 20, **characterized in that** the tensioning strap (100, 200, 300) is designed as a single piece and consists of a plastic material.

22. Tensioning strap according to one of Claims 1 to 21, **characterized in that** the tensioning lock (102, 202, 302) has a through-passage opening (104, 204, 304) for the strap part (101, 201, 301).

23. Tensioning strap according to Claim 22, **characterized in that** the catch (109, 209, 309) is integrally formed in the through-passage opening (104, 204, 304).

24. Tensioning strap according to one of Claims 1 to 23, **characterized in that**, in the pulling direction, the strap part (101, 201, 301) first of all moves past the blocking element (125, 225, 325) and then moves past the catch (109, 209, 309).

25. Tensioning strap according to one of Claims 1 to 24, **characterized in that**, as the strap part (101, 201, 301) is being moved through the through-passage opening (104, 204, 304), the catch (109, 209, 309) is deformed elastically by the arresting elements (108, 208, 308).

26. Tensioning strap according to Claim 1, **characterized in that** the strap part (101, 201) is designed in the form of a ladder.

27. Tensioning strap according to Claim 1, **characterized in that** the strap part (301) is of sawtooth-like form.

## Revendications

1. Collier de serrage pour empaquetage et/ou pour fixation d'au moins un objet long comprenant une partie de collier (101, 201, 301, 401) flexible longue pourvue d'éléments de blocage et un manchon de serrage (102, 202, 302) pour bloquer la partie de collier enveloppée autour de l'objet et appliquée contre celui-ci dans le manchon de serrage par engagement mutuel entre un cran du manchon de serrage et au moins un des éléments de blocage de la partie de collier, l'engagement mutuel empêchant un élargissement d'un oeillet entouré par la partie de collier et traversé par l'au moins un objet, et comprenant aussi un organe de blocage supplémentaire (125, 225, 325, 425) qui vient en prise avec la partie de collier par un rapprochement mutuel de la partie de collier et de l'organe de blocage à la suite d'une force exercée par l'objet sur la partie de collier ou l'organe de blocage, dès que la partie de collier entoure par contact étroit l'au moins un objet, et qui présente, au niveau de son côté opposé à la direction de traction de la partie de collier, au moins une face de butée, qui bute, lors d'un engagement entre l'organe de blocage et la partie de collier, contre une face de butée complémentaire, tournée dans la direction de traction, d'un ou de plusieurs des éléments de blocage ou d'un ou de plusieurs éléments d'encliquetage supplémentaires de la partie de collier, **caractérisé en ce que** les faces de butée complémentaires sont réalisées de telle sorte qu'elles bloquent tout mouvement supplémentaire dans la direction de traction de la partie de collier (101, 201, 301, 401) en cas de venue en butée mutuelle et empêchent un rétrécissement supplémentaire de l'oeillet (12) entouré par la partie de collier (101, 201, 301, 401).

2. Collier de serrage selon la revendication 1, **caractérisé en ce que** le manchon de serrage est monté à au moins une extrémité de la partie de collier (101, 201, 301).

3. Collier de serrage selon la revendication 1 ou 2, **caractérisé en ce que** le manchon de serrage est associé à au moins une partie de base (410) qui est prévue pour être fixée à un corps de réception.

4. Collier de serrage selon la revendication 3, **caractérisé en ce que** la partie de base est venue de moulage dans le même matériau.

5. Collier de serrage selon la revendication 3, **caractérisé en ce que** la partie de base (410) est mobile par rapport à la partie de collier (401).

6. Collier de serrage selon la revendication 1, **caractérisé en ce que** l'organe de blocage (125, 225, 325) est prévu dans la région du manchon de serrage.

7. Collier de serrage selon la revendication 4 ou 5, **caractérisé en ce que** l'organe de blocage (425) est associé à la partie de base (410).

8. Collier de serrage selon l'une quelconque des revendications 1 à 7, **caractérisé en ce que** les éléments de blocage sont formés par des goupilles (108, 208) qui s'étendent à intervalles les unes des autres transversalement à une direction longitudinale de la partie de collier (101, 201).

9. Collier de serrage selon la revendication 8, **caractérisé en ce que** les goupilles (108, 208) relient deux bords de côtés longitudinaux continus (112, 212) de la partie de collier (101, 201) et limitent des ouvertures de blocage (113, 213) pour recevoir les crans (109, 209) et l'organe de blocage (125, 225).

10. Collier de serrage selon la revendication 1, **caractérisé en ce que** les éléments de blocage (308) et les éléments d'encliquetage (330) sont disposés sur des côtés longitudinaux opposés de la partie de collier (303).

11. Collier de serrage selon la revendication 10, **caractérisé en ce que** les éléments de blocage (308) et les éléments d'encliquetage (330) sont formés en tant que dents avec un flanc plus raide et un flanc plus plat (315, 331 ; 314, 332).

12. Collier de serrage selon la revendication 11, **caractérisé en ce que** les flancs plus raides (315, 331) des dents de blocage (308) et des dents d'encliquetage (330) sont essentiellement tournés dans des directions opposées.

13. Collier de serrage selon l'une quelconque des revendications 1 à 12, **caractérisé en ce que** l'organe de blocage (125, 325) est disposé sur un côté interne, tourné vers les objets (10), du manchon de serrage (102, 302), et est pressé par les objets (10) vers l'extérieur en prise avec la partie de collier (101, 301).

14. Collier de serrage selon la revendication 13, **caractérisé en ce que** l'organe de blocage (125, 325) dépasse, sans application de force extérieure, vers l'intérieur au-delà du côté interne du manchon de serrage (102, 302).

15. Collier de serrage selon la revendication 13 ou 14, **caractérisé en ce que** l'organe de blocage (125, 325) est relié de manière pivotante au manchon de serrage (102, 302) et vient en prise avec une partie d'engagement (127, 327) disposée à l'écart du point de pivotement entre au moins deux éléments de blocage ou d'encliquetage voisins (108, 308) de la partie de collier (101, 301).

16. Collier de serrage selon la revendication 15, **caractérisé en ce que** l'organe de blocage (125, 325) est relié au manchon de serrage (125, 325) par une charnière plate (126, 326).

17. Collier de serrage selon l'une quelconque des revendications 1 à 16, **caractérisé en ce que** l'organe de blocage (225) est disposé en dehors de l'oeillet (12) entouré par la partie de collier (201), et **en ce que** la partie de collier (201) est pressée par les objets (10) traversant l'oeillet (12) vers l'extérieur en engagement de blocage avec l'organe de blocage (225).

18. Collier de serrage selon la revendication 17, **caractérisé en ce que** l'organe de blocage (225) est relié rigidement au manchon de serrage (202).

19. Collier de serrage selon la revendication 17 ou 18, **caractérisé en ce que** l'organe de blocage est formé par un nez de blocage (225) saillant vers l'intérieur dans la direction de la partie de collier (201) au-dessus d'une partie du manchon de serrage (202).

20. Collier de serrage selon l'une quelconque des revendications 17 à 19, **caractérisé en ce que** le manchon de serrage (202) présente au moins un guide (228, 229) pour la partie de collier (201), qui retient la partie de collier (201) déplacée le long du guide à un certain écartement de l'organe de blocage (225).

21. Collier de serrage selon l'une quelconque des revendications 1 à 20, **caractérisé en ce que** le collier de serrage (100, 200, 300) est formé d'une pièce et se compose d'un matériau en plastique.

22. Collier de serrage selon l'une quelconque des revendications 1 à 21, **caractérisé en ce que** le manchon de serrage (102, 202, 302) présente une ouverture de passage (104, 204, 304) pour la partie de collier (101, 201, 301).

23. Collier de serrage selon la revendication 22, **caractérisé en ce que** le cran (109, 209, 309) est moulé dans l'ouverture de passage (104, 204, 304).

24. Collier de serrage selon l'une quelconque des revendications 1 à 23, **caractérisé en ce que** la partie de collier (101, 201, 301) se déplace dans la direction de traction d'abord devant l'organe de blocage (125, 225, 325) puis devant le cran (109, 209, 309).

25. Collier de serrage selon l'une quelconque des revendications 1 à 24, **caractérisé en ce que** le cran (109, 209, 309) est déformé élastiquement par les éléments de blocage (108, 208, 308) lors du passage de la partie de collier (101, 201, 301) à travers l'ouverture de passage (104, 204, 304).

26. Collier de serrage selon la revendication 1, **caractérisé en ce que** la partie de collier (101, 201) est conçue en forme de conducteur.

27. Collier de serrage selon la revendication 1, **caractérisé en ce que** la partie de collier (301) est en forme de dents de scie.
